# NEUE EUROPÄISCHE PATENTSCHRIFT

(11) **EP 0 650 979 B2**
(45) Veröffentlichungstag und Bekanntmachung des Hinweises auf die Entscheidung über den Einspruch: **04.08.1999**
(45) Hinweis auf die Patenterteilung: 06.03.1996
(21) Anmeldenummer: 94116764.5
(22) Anmeldetag: 25.10.1994
(51) Int. Cl.: C08F 8/00, C09D 133/04, C09D 5/03

(54) **Verfahren zur Herstellung von radikalisch vernetzbaren Copolymerisaten**
Process for preparation of radically cross-linkable copolymers
Procédé de préparation des copolymères réticulable par radicaux

(30) Priorität: 03.11.1993 DE 4337482
(43) Veröffentlichungstag der Anmeldung: 03.05.1995
(73) Patentinhaber: BASF Aktiengesellschaft, 67063 Ludwigshafen (DE)
(72) Erfinder: Kempter, Fritz Erdmann, Dr., D-68161 Mannheim (DE); Reich, Wolfgang, Dr., D-96476 Rodach (DE); Hofmann, Jürgen, D-67069 Ludwigshafen (DE)

(56) Entgegenhaltungen:
- EP-A- 0 554 783
- WO-A-88/07555
- WO-A-91/09888
- DE-A- 1 495 144
- DE-A- 1 964 547
- DE-A- 2 140 081
- DE-A- 2 336 517
- DE-A- 2 436 186
- DE-A- 3 641 436
- DE-B- 1 957 358
- Kunststoffe, Band 81, 1991, S.479-485

## Beschreibung

Die vorliegende Erfindung betrifft ein neues Verfahren zur Herstellung von radikalisch vernetzbaren Copolymerisaten durch polymeranaloge Umsetzung
A) eines Copolymerisates (A), welches aus
   a1) 20 bis 85 mol-% eines Monomeren (a1) mit dem Strukturelement der Methacrylsäure und
   a2) 15 bis 80 mol-% eines sonstigen radikalisch polymerisierenden Monomeren (a2), wobei
   a3) 5 bis 50 mol-% der Gesamtmenge der Monomeren (a1) und (a2) funktionelle Gruppen tragende Monomeren (a3) sind, deren funktionelle Gruppen zu einer Kondensations- oder Additionsreaktion befähigt sind, aufgebaut ist,
   mit
B) einem olefinisch ungesättigten Monomeren (B), welches eine funktionelle Gruppe trägt, die zu der der Monomeren (a3) komplementär ist.

Aus der US-A 4 064 161 sind Copolymerisate bekannt, die als strahlenhärtbare Pulverbindemittel verwendet werden können. Nach den dortigen Herstellvorschriften werden sie durch anionische Copolymerisation von Alkylestern der Methacrylsäure erhalten, wobei die Alkylgruppen zu einem gewissen Anteil funktionelle Gruppen, z.B. Glycidylgruppen, tragen. In einem zweiten Schritt werden diese Copolymerisate polymeranalog mit funktionelle Gruppen tragenden olefinisch ungesättigten Monomeren, z.B. Acrylsäure, zu Copolymerisaten umgesetzt, welche olefinisch ungesättigte Gruppen als funktionale Gruppen tragen. Die Umsetzung erfolgt in Lösung bei Temperaturen von 100°C und Verweilzeiten von mehreren Stunden in gerührten Reaktoren.

Die DE-A 24 36 186 betrifft durch UV-Strahlung härtbare Pulverbindemittel auf Basis von Vinyl- und Acrylpolymeren, die polymerisierbare ungesättigte Bindungen, in den Seitenketten enthalten. Durch radikalische Lösungspolymerisation wird aus überwiegendem Anteil Styrol, Ethylacrylat und Glycidylmethacrylat ein Copolymerisat hergestellt. Dieses Epoxid-Gruppen tragende Copolymerisat wird anschließend in ca. 50%iger Lösung mit Acrylsäure bei Temperaturen von 100°C über 3 h hinweg polymeranalog umgesetzt.

Die bisher bekannten Verfahren zur polymeranalogen Umsetzung weisen den Nachteil auf, daß sich die radikalisch vernetzbaren Polymerisate aufgrund der langen Verweilzeiten bei erhöhten Temperaturen verfärben oder gar vorzeitig thermisch abreagieren und vernetzen. Zudem erfordern sie den Einsatz großer Lösungsmittelmengen, die entweder entsorgt oder wiederaufgearbeitet werden müssen.

Aufgabe der vorliegenden Erfindung war daher ein weitgehend lösungsmittelfreies Verfahren zur polymeranalogen Umsetzung der Copolymerisate (A) mit Vinylverbindungen (B), bei dem die Reaktionmischung weniger thermisch beansprucht wird.

Demgemäß wurde ein Verfahren zur Herstellung von radikalisch vernetzbaren Copolymerisaten mit einem zahlenmittleren Molekulargewicht Mₙ zwischen 1.500 und 10.000 durch polymeranaloge Umsetzung in einem Extruder
A) eines Copolymerisates (A), welches aus
   a1) 20 bis 85 mol-% eines Monomeren (a1) mit dem Strukturelement der Methacrylsäure und
   a2) 15 bis 80 mol-% eines sonstigen radikalisch polymerisierenden Monomeren (a2), wobei
   a3) 5 bis 50 mol-% der Gesamtmenge der Monomeren (a1) und (a2) funktionelle Gruppen tragende Monomeren (a3) sind, deren funktionelle Gruppen zu einer Kondensations- oder Additionsreaktion befähigt sind,
      aufgebaut ist,
   mit
B) einem olefinisch ungesättigten Monomeren (B), welches eine funktionelle Gruppe trägt, die zu der der Monomeren (a3) komplementär ist,
   gefunden, welches dadurch gekennzeichnet ist, daß man die polymeranaloge Umsetzung bei 70 bis 150°C und einer mittleren Verweilzeit von 3 bis 20 min vornimmt, wobei das Copolymerisat A) in Lösung mit einem Feststoffgehalt von mindestens 60 Gew.-% eingesetzt wird.

Als Ausgangsstoffe für das erfindungsgemäße Verfahren werden die Copolymerisate (A) und die olefinisch ungesättigten Monomeren (B), im folgenden als Vinylmonomeren (B) bezeichnet, eingesetzt. Die Copolymerisate (A), aufgebaut aus den Monomeren (a1) bis (a3) tragen reaktive Gruppen, über die es in einer anschließenden polymeranalogen Reaktion zu dem erfindungsgemäßen Copolymerisat umgesetzt werden kann. Hierzu werden als Monomeren (a1) und (a2) solche mitverwendet (Monomeren (a3)), die neben der olefinischen Doppelbindung zusätzliche reaktive Gruppen tragen, die unter den Bedingungen der Copolymerisation inert sind. Die Copolymerisate (A) werden in einem 2. Schritt mit solchen olefinisch ungesättigten Monomeren (B), im folgenden als Vinylverbindungen (B) bezeichnet, umgesetzt, die zusätzlich noch eine Funktionalität aufweisen, die mit den reaktiven Gruppen des Copolymerisates (A) unter Ausbildung einer chemischen Bindung reagieren.

Das erfindungsgemäße Verfahren betrifft die Herstellung von radikalisch vernetzbaren Copolymerisaten mit einem zahlenmittleren Molekulargewicht Mₙ zwischen 1500 und 10000, insbesondere zwischen 1500 und 6000.

Die Polydispersität M_{w}/Mₙ, der Quotient aus dem zahlenmittleren und dem gewichtsmittleren Molekulargewicht der Copolymerisate, stellt ein Maß für die Molekulargewichtsverteilung der Copolymerisate dar und hat im Idealfall den Wert 1, jedoch genügen für die Praxis auch Werte unter 4, insbesondere unter 3,5.

Die Angaben zur Polydispersität sowie zum zahlenmittleren und gewichtsmittleren Molekulargewicht Mₙ und M_{w} beziehen sich hier auf gelpermeationschromatographische Messungen, wobei Polystyrol als Standart verwendet wurde. Die Methode ist im Analytiker Taschenbuch Bd. 4, Seiten 433 bis 442 , Berlin 1984 beschrieben.

Das Molekulargewicht und die Molekulargewichtsverteilung der erfindungsgemäßen Copolymerisate werden durch die Polymerisationsbedingungen bei der Herstellung der Copolymerisate (A) bestimmt.

Die Bildung von Copolymerisaten (A) mit geringer Polydispersität und niedrigem Molekulargewicht ist besonders begünstigt, wenn Reaktionstemperaturen von 140 bis 210 bevorzugt von 150 bis 180 und besonders bevorzugt von 150 bis 170°C sowie Reaktionszeiten 2 bis 90 bevorzugt von 5 bis 25 und besonders bevorzugt von 10 bis 15 Minuten gewählt werden.

Falls Monomeren oder Lösungsmittel mitverwendet werden, deren Siedepunkte unterhalb der Reaktionstemperatur liegen, ist die Reaktion zweckmäßigerweise unter Druck, vorzugsweise unter dem Eigendruck des Systems durchzuführen. Höhere Drücke als 30 bar sind in der Regel jedoch nicht erforderlich.

Derartige Polymerisationsbedingungen lassen sich in einem Rührreaktor, bei dem eine rasche Durchmischung der Ausgangsprodukte und Wärmeabfuhr gewährleistet ist und vor allem in einem Ringspalt-Dünnschichtreaktor mit Ruckführungseinrichtung aufrecht erhatten, da hier die exotherme Polymerisation wegen des günstigen Verhältnisses von Wärmeaustauschfläche zu Reaktionsvolumen unter weitgehend isothermen Bedingungen durchführbar ist.

Copolymerisationen in Ringspalt-Dünnschichtreaktoren sind z.B. in der DE-A 4 203 277 und DE-A 4 203 278 beschrieben. Sie sind allgemein bekannt und können z.B. in der Art eines mit einem Rotor ausgestatteten Rohrreaktors ausgeführt werden und sind z.B. von der Fa. Buss SMS GmbH Verfahrenstechnik erhältlich. Sie sind vorzugsweise mit einer Vorrichtung ausgestattet, mit dem ein Teil des Produktes an den Reaktoreintritt zurückgeführt werden kann. Andere Polymerisationsapparate, z.B. Rührkessel, kommen ebenfalls in Betracht, sofern für eine ausreichende Wärmeabfuhr gesorgt wird.

Man kann die Polymerisation in Substanz ausführen, jedoch ist die Lösungspolymerisation wegen der geringen Viskosität der entstehenden Polymerlösungen im allgemeinen zu bevorzugen. Die Menge der Lösungsmittel beträgt im allgemeinen 0 bis 30, vorzugsweise 10 bis 25 Gew.-%, bezogen auf die Gesamtmenge der eingesetzten Monomeren.

Als Lösungsmittel eignen sich alle Flüssigkeiten, die sich gegenüber den Reaktionspartnern inert verhalten, also beispielsweise Ether wie Ethylenglycolether und Ethylendiglycolether, Ester wie Butylacetat und Ketone wie Methylamylketon. Besonders vorteilhaft werden regelnde Lösungsmittel verwendet wie Alkylaromaten, z.B. Toluol, Xylole und besonders Cumol und m-Xylol sowie aliphatische Alkohole, z.B. Isopropanol.

Es empfiehlt sich meistens, den Umsatz auf 50 bis 95, vorzugsweise 80 bis 90 mol-% zu begrenzen, da man auf diese Weise engere Molekulargewichtsverteilungen erzielt. Nicht umgesetzte Monomere sowie flüchtige Oligomere und das Lösungsmittel werden nach üblicher destillativer Abtrennung vom Polymeren zweckmäßigerweise wieder in die Polymerisation zurückgeführt.

Als Polymerisationsinitiatoren eignen sich vor allem solche radikalbildenden Verbindungen, deren Zerfallstemperatur bei 140 bis 200°C liegt, also beispielsweise Di-tert.-butylperoxid und Dibenzoylperoxid.

Die Menge der Initiatoren beträgt vorzugsweise 0,5 bis 10, besonders bevorzugt 1 bis 5 mol-% der Gesamtmenge der eingesetzten Monomeren.

Bezüglich der stofflichen Zusammensetzung der Copolymerisate (a) ist zu betonen, daß es unabhängig von der Art des restlichen Molekülteils auf den Anteil der Monomeren (a1) mit dem Strukturelement 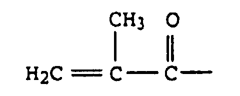 der Methacrylsäure ankommt und daß es prinzipiell keine Rolle spielt, welchem Monomerentyp (a1) bis (a2) die Monomeren (a3) mit den funktionellen Gruppen angehören. Zum Monomerentyp (a1) zählen somit Monomeren mit nicht-reaktionsfähigen Resten und solche vom Typ (a3). Im folgenden werden zunächst die erstgenannten Monomeren und danach die Monomeren (a3) mit den funktionellen Gruppen näher erläutert.

Bei den Monomeren (a1) sind in erster Linie die C₁-bis C₁₂-Alkylester der Methacrylsäure zu nennen, beispielsweise Ethylmethacrylat, 2-Ethylhexylmethacrylat und n-Butylmethacrylat sowie vor allem Methylmethacrylat.

Ferner kommen Methoxyethylmethacrylat, Cyclohexylmethacrylat und Benzylmethacrylat in Betracht.

Als Monomeren (a2) kommen grundsätzlich alle radikalisch polymerisierbaren Monomeren in Betracht. Von besonderer Bedeutung sind die Alkylester der Acrylsäure. Beispiele für weitere gut geeignete Monomeren dieser Art sind iso-, n- und tert-Butylacrylat. Weiterhin eignen sich außer Styrol und 1-Methylstyrol besonders 4-tert.-Butylstyrol und 2-Chlorstyrol.

Als weitere radikalisch polymerisierbare Monomere (a2) seien Vinylether von C₂- bis C₂₀-Fettsäuren, wie vor allem Vinylacetat und Vinylpropionat, Vinylhalogenide wie Vinylchlorid und Vinylidenchlorid, konjugierte Diene wie Butadien und Isopren, Vinylether von C₁- bis C₂₀-Alkanolen, z.B. Vinyl-iso-butylether, Acrylnitril, Methacrylnitril und die C₁ - bis C₁₀-Alkylester der Crotonsäure und der Maleinsäure genannt. Ferner sind heterocyclische Vinylverbindungen wie 2-Vinylpyridin und N-Vinylpyrrolidon geeignet.

Die Monomeren (a3), die jeder der Klassen (a1) und (a2) angehören können, tragen funktionelle Gruppen, durch die in einer Kondensations- oder Additionsreaktion mit einer eine komplementäre Gruppe tragenden Vinylverbindung (B) die gewünschte Funktionalisierung der Copolymerisate (A) zum erfindungsgemäßen Copolymerisat erfolgen kann. Solche funktionellen Gruppen sind z.B. die Hydroxylgruppe, die Carbonamidgruppe, die Aminogruppe, die Carbonylgruppe in Aldehyd- oder Ketonfunktion, die Isocyanatgruppe und vor allem die Carboxylgruppe und die Epoxigruppe.

Entsprechende Monomere sind in erster Linie die relativ preiswerten Verbindungen 2-Hydroxyethylacrylat und -methacrylat, Allylalkohol, 2-Aminoethylacrylat und -methacrylat, Acrolein, Methacrolein und Vinylethylketon, Acrylamid und Methacrylamid, Vinylisocyanat, Methacryloylisocyanat, Dimethyl-3-isopropenylbenzylisocyanat (TMI) und 4-Isocyanatostyrol sowie vor allem Acrylsäure, Methacrylsäure, Crotonsäure, Maleinsäure und deren Anhydride sowie Glycidylacrylat und -methacrylat.

Die Polymerisate (A) sind zu 20 bis 85 mol-%, bevorzugt 40 bis 85 und besonders bevorzugt 60 bis 85 mol-% aus einem oder mehreren der Monomeren (a1) und zu 15 bis 80 mol-%, bevorzugt 15 bis 60 und besonders bevorzugt 15 bis 40 mol-% aus einem oder mehreren der Monomeren (a2) aufgebaut.

Der Anteil eines oder mehrerer der Monomeren (a3) an der Gesamtmenge der Monomeren (a1) und (a2) beträgt 5 bis 50 mol-%, bevorzugt 15 bis 40 mol-%, besonders bevorzugt 20 bis 35 mol-%.

Bei Umsätze von weniger als 100% wird die gewünschte Zusammensetzung des Polymerisates (A) selten der der eingesetzten Monomerenmischung entsprechen, weil die Monomeren mit unterschiedlicher Geschwindigkeit polymerisieren. In solchen Fällen ist es erforderlich, den Anteil der jeweiligen Monomeren an dem Monomerengemisch entsprechend ihrer Reaktionsgeschwindigkeit anzupassen. Diese Anpassung kann beispielsweise so erfolgen, daß man die Zusammensetzung der nicht umgesetzten abdestillierten Monomerenmischung analysiert und so auf die Zusammensetzung des copolymerisates (A) zurückschließt. Grundsätzlich wird es beispielsweise erforderlich sein, den Anteil der Methacrylsäurederivate relativ hoch zu wählen und den der sonstigen Monomeren zu erniedrigen.

Vorzugsweise befreit man die Copolymerisate (A) im Anschluß an ihre Herstellung destillativ vom Lösungsmittel und von überschüssigen Monomeren und entfernt die verbleibenden geringen Mengen an Restmonomeren und flüchtigen Oligomeren bei vermindertem Druck oder Durchleiten von Stickstoff durch die Schmelze.

Hierzu ist auf Grund der hohen Glasübergangstemperaturen der Polymerisate und der zum Teil hohen Siedepunkte der Monomeren ein kontinuierlich betriebener in Reihe geschalteter Dünnschichtverdampfer besonders gut geeignet, in dem das Copolymerisat vorzugsweise bei Temperaturen von 180 bis 220°C oberhalb der Polymerisationstemperatur entgast wird.

Die Polymerisate (A) werden nach dem erfindungsgemäßen Verfahren in einer polymeranalogen Umsetzung zu den radikalisch vernetzbaren Copolymerisaten derivatisiert. Sie werden mit solchen funktionellen Vinylverbindungen (B) umgesetzt, deren funktionelle Gruppen sich zu denen des Polymerisates komplementär verhalten. Als derartige funktionelle Gruppen tragende Vinylmonomeren (B) kommen dieselben Verbindungen in Betracht wie die bereits genannten Monomeren (a3). Aus der Gruppe der Vinylmonomeren (a3) bzw. (B) kann nun ein komplementäres Paar ausgewählt werden, dessen funktionelle Gruppen in einer Kondensations- oder Additionsreaktion miteinander reagieren können. Der eine Partner wird bei der Copolymerisation zum Aufbau des Polymerisates verwendet, der andere dient als Reaktand in der polymeranalogen Umsetzung. In Betracht kommen hier Paare wie Methacryloylisocyanat/Hydroxyalkylmethacrylat, Hydroxyalkylmethacrylat/Methacrylsäureanhydrid und Hydroxyalkylmethacrylat/Methacryloylchlorid. Bevorzugt ist vor allem die Kombination Glycidylmethacrylat oder Glycidylacrylat mit Methacrylsäure oder Acrylsäure.

Eine weitere Möglichkeit, zu den erfindungsgemäßen Polymerisaten zu gelangen, besteht darin, die gegebenenfalls im Copolymerisat (A) enthaltenen Estergruppen partiell zu hydrolysieren und die entstandenen Carboxylgruppen anschließend mit Glycidylmethacrylsäureestern oder Glycidylacrylsäureestern umzusetzen.

Als Katalysatoren kommen alle diejenigen in Betracht, die üblicherweise zur Beschleunigung der Reaktion zwischen den komplementären Gruppen eingesetzt werden. Für das Reaktionspaar Epoxid/Carbonsäure sind bespielsweise Phosphine wie Triphenylphosphin sowie Amine wie Dimethylbenzylamin, Dimethylethanolamin und Tributylamin sowie Tetraalkylammoniumhalogenide und für das Reaktionspaar Isocyanat/Alkohol beispielsweise Organozinnverbindungen geeignet.

Das Verhältnis an funktionellen Gruppen des Polymerisates (A) zu den funktionellen Vinylmonomeren (B) beträgt vorzugsweise 0,7 : 1 bis 1,3 : 1, bevorzugt 0,8 : 1 bis 1,2 : 1 und ganz besonders bevorzugt 1 : 1.

Ein Überschuß an funktionellen Gruppen am Polymerisat (A) kann der Abwandlung der Eigenschaften des vernetzten Polymeren dienen, etwa um es weniger elektrostatisch aufladbar zu machen. Solche freien Gruppen sind insbesondere die Carboxylgruppe, die Hydroxylgruppe und die Carbonamidgruppe.

Um eine zu früh einsetzende thermische Vernetzung zu vermeiden, ist es gegebenenfalls erforderlich, den Polymerisaten (A) vor der polymeranalogen Umsetzung Inhibitoren in Mengen von 1 bis 5000 ppm, bevorzugt von 1 bis 1000 zuzusetzen. Geeignete Inhibitoren sind z.B. Phenylthiazine, sterisch gehinderte o-Phenole oder Halbether des Hydrochinons.

Die erfindungsgemäße polymeranaloge Umsetzung der Polymerisate (A) mit den hierzu komplementären monomeren funktionellen Vinylverbindungen (B) zu den erfindungsgemäßen Polymerisaten erfolgt bei Reaktionstemperaturen von 70 bis 150°C, bevorzugt 90-140°C, besonders bevorzugt 90-130°C, wobei die Verweilzeiten 3 bis 20 Minuten, bevorzugt 5 bis 10 betragen.

Das Copolymerisat (A) wird in Lösung mit einem Feststoffgehalt von mindestens 60, bevorzugt 80 bis 90 Gew.-%, besonders bevorzugt frei von flüchtigen Bestandteilen eingesetzt.

Aufgrund der meist hohen Viskosität der Reaktionsmischungen und der erforderlichen kurzen Reaktionszeiten lassen sich die polymeranalogen Umsetzungen besonders günstig in einem Extruder, insbesondere in einem selbstreinigenden Mehrschneckenextruder durchführen.

Als Mehrschneckenextruder eignen sich hierbei die in der Kunststoffverrarbeitung an sich bekannten mehrwelligen, insbesondere zweiwelligen Schneckenmaschinen, vorzugsweise 2- oder 3-gängige, zweiwellige, selbstreinigende Knetscheiben-Schneckenpressen. Die Extruder besitzen mindestens eine Entgasungsöffnung und sind zur optimalen Verfahrensführung im allgemeinen zonenweise temperierbar. Die Schnecken sind vorzugsweise selbstreinigend und gleichsinnig drehend und in ihrer Gestaltung den jeweiligen Arbeitsbedingungen in den einzelnen Abschnitten des Extruders angepaßt.

Die Wahl der jeweils geeigneten Schnecken bzw. Schneckenelemente für eine optimale Verfahrensführung ist dem Fachmann geläufig (vgl. "Schneckenmaschinen in der Verfahrenstechnik", H. Hermann, Springer Verlag, Berlin, Heidelberg, New York 1972).

Bevorzugt wird die polymeranaloge Umsetzung in einem Extruder durchgeführt, idem man
I. in einer ersten Zone das Copolymerisate (A) in fester Form einspeist und fördert,
II. in einer zweiten Zone das Copolymerisat (A) auf 90 bis 150°C erhitzt, die Vinylverbindung (B) zugibt und mit dem Copolymerisat (A) homogen vermischt,
III. in einer dritten Zone die homogene Schmelze von flüchtigen Bestandteilen befreit und
IV. danach die entgaste Schmelze aus dem Extruder austrägt.

In der ersten Zone wird das Copolymerisat A in Form eines Granulates gegebenenfalls zusammen mit weiteren festen Hilfs- und Zusatzstoffen in den Extruder eingespeist und in die zweite Zone gefördert. Die Schnecken in dieser ersten Zone sind daher förderwirksam ausgebildet, wobei die erste Zone eine Länge vom 2- bis 10-fachen des Schneckendurchmessers aufweist. Um ein vorzeitiges Verklumpen und Verkleben des Materials zu vermeiden, arbeitet man in der ersten Zone vorzugsweise unterhalb der Erweichungstemperatur des Copolymerisates (A).

In der zweiten Zone wird das Polymerisat (A) aufgeschmolzen und auf die Reaktionstemperatur erhitzt. Die Vinylverbindung (B) in flüssiger Form sowie gegebenenfalls weitere flüssige Hilfs- und Zusatzstoffe sowie die Inhibitoren werden zugegeben und alle Mischungsbestandteile werden homogen miteinander vermischt. Günstigerweise wird die Vinylverbindung (B) bereits vor der Zugabe mit den Inhibitoren vermischt. Die Vinylverbindung (B) und die weiteren Hilfs- und Zusatzstoffe werden gegebenenfalls zuvor aufgeschmolzen oder in einem inerten Lösungsmittel gelöst. Besonders bevorzugt sind Extruder mit Schnecken, die so ausgebildet sind, daß man einen optimalen Misch- und Homogenisierungseffekt erzielt. Beispielsweise können hierzu die üblichen Knetscheiben-Schneckenelemente eingesetzt werden, da in ihnen auch eine gute Quervermischung bewirkt wird.

In der dritten Zone wird die Schmelze von gegebenenfalls mitverwendeten Lösungsmitteln, nicht umgesetzten Vinylverbindungen (B) sowie sonstigen niedermolekularen flüchtigen Bestandteilen befreit. Die Entgasung erfolgt durch Anlegen eines Unterdruckes an die in diesem Teil des Extruders vorhandenen Entgasungsöffnungen. In der Entgasungszone wird gleichzeitig auch eine gute Längsdurchmischung der Schmelze Schmelze vorgenommen, beispielsweise, indem man den Extruder in dieser Zone mit Schnecken unterschiedlicher Steigung versieht. Die Länge der Entgasungszone beträgt im allgemeinen das 2- bis 20-fache des Schneckendurchmessers.

Am Ende der Entgesungszone wird die homogene Schmelze über eine Düse ausgepreßt.

Die Copolymerisate sind bereits in dieser Form handelsfähig. Meistens überführt man sie durch Lösen oder Dispergieren in eine gebrauchsfertige Zubereitung.

Entsprechend dem Hauptanwendungsgebiet als Bindemittel von Pulverlacken trocknet man die Copolyrnerisate jedoch vorzugsweise und verarbeitet sie in an sich bekannter Weise zu Pulvern des mittleren Teilchendurchmessers von 10 bis 100 µm.

Gewünschtenfalls werden die radikalisch vernetzbaren Copolymerisate nachträglich mit Zusatzstoffen wie Pigmenten, Vernetzungskatalysatoren, Stabilisatoren, Entgesungsmittel, Lichtschutzmittel, Mattierungsmitteln und Verlaufshilfsmitteln versetzt.

Bevorzugt werden diese Stoffe, sofern sie sich gegenüber den Copolymerisaten (A) und den Vinylverbindungen (B) inert verhalten, jedoch bereits während der polymeranalogen Umsetzung zugesetzt.

Als Vernetzungskatalysatoren werden die üblichen Fotoinitiatoren wie Benzoinether, Benzophenone, Benzoinphosphinoxide und Thioxanthone eingesetzt.

Das erfindungsgemäße Verfahren zeichnet sich durch eine hohe Wirtschaftlichkeit aus, weil der Verbrauch an Lösungsmitteln die aufgearbeitet oder entsorgt werden müssen, vergleichsweise gering ist. Bei der polymeranalogen Umsetzung der Copolymerisate (A) mit den Vinylverbindungen (B) werden die Ausgangsverbindungen und die gebildeten radikalich vernetzbaren Copolymerisate nur wenig thermisch belastet, so daß kaum farbgebende Komponenten gebildet werden und kaum zu beobachten ist, daß ein Teil der Vinylgruppen bei der polymeranalogen Umsetzung bereits thermisch abreagiert.

Das Verfahren eignet sich insbesondere zur Herstellung von radikalisch vernetzbaren Copolymerisaten mit einem geringen Molekulargewicht und einer besonders engen Molekulargewichtverteilung. Sie können zu strahlenhärtbaren Pulverlacken weiterverarbeitet werden, die auch bei niedrigen Temperaturen gut verfilmbar sind und sich trotzdem bei relativ hohen Temperaturen lagern lassen, ohne zu verklumpen (Blockfestigkeit).

In der Praxis erfolgt die Verfilmung und die UV-Bestrahlung mittels dem Fachmann bekannter üblicher Verfahren in Abhängigkeit vom Anwendungsgebiet bei 70 bis 150°C, in den meisten Fällen jedoch bei 90 bis 130°C. Hierzu werden solche Polymerisate ausgewählt, deren Glasübergangsbereiche T_{G} in der Nähe der gewünschten Verarbeitungstemperatur liegen.

Die maximalen Lagertemperaturen, die bei den jeweiligen Polymer-Pulvern beachtet werden müssen, liegen in der Regel bei 40 bis 50°C.

Die nach dem erfindungsgemäßen Verfahren hergestellten Polymerisate können durch Selbstvernetzung oder durch Mitverwendung eines Co-Vernetzers ausgehärtet werden. Beispiele für Co-Vernetzer sind Verbindungen, die durch Kondensation von Methacryl- oder Acrylsäure mit hydroxyalkylierten Triaminotriazinen hergestellt werden. Bovorzugte Co-Vernetzer sind ebenso die Addukte aus Triglycidylisocyanurat und Acrylsäure.

Die Verfahrensprodukte dienen als Beschichtungsmittel für beliebige Untergründe, wie Metall, Holz, Spanplatten oder Kunststoffe. Besonders geeignet sind die Verbindungen als unpigmentierter Decklack bei der Autokarosseriebeschichtung.

### A. Herstellung von Copolymerisaten (A)

### Beispiel 1a:

In einen 5-1-Reaktor wurde bei 170°C zu einer Vorlage aus 600 g Isopropanol während 1 Stunde kontinuierlich eine Mischungaus 750g Glycidylmethacrylat, 330 g Styrol, 486g Methylacrylat, 1434g Methylmethacrylat und 58,3g Di-tert.-butylperoxid gegeben. Anschließend wurde eine Lösung von 4 g Di-tert.-butylperoxid in 150 g Isopropanol zugesetzt. Es wurde noch weitere 15 Minuten polymerisiert, wonach die Polymerisation durch Abkühlen auf Raumtemperatur abgebrochen wurde. Die Polymerisatlösung wurde mit Xylol auf die anderthalbfache Menge verdünnt, filtriert und in einem Dünnschichtverdampfer bei 210°C und einem Druck von 1 mbar von flüchtigen Bestandteilen befreit.

Es wurden 1254 g eines Copolymerisates (A/1) erhalten, das eine Glasübergangstemperatur T_{G} von 42°C, einen Erweichungspunkt von 84°C, ein zahlenmittleres Molekulargewicht von 1800, eine Polydispersität von 2,1 und einen Epoxydgehalt von 1,54 Epoxydmilliäquivalenten pro g (vgl. Ullmanns Encyclopädie der technischen Chemie, Band 8,3. Auflage von 1957, Seite 436) aufwies. Der Feststoffgehalt betrug 99,2 % und wurde ermittelt, indem eine Probe des Copolymerisates 20 Minuten bei 200°C getrocknet wurde.

### Beispiel 2a:

Eine Mischung aus 600 g Isopropanol, 750g Glycidylmethacrylat, 320 g Hydroxyethylacrylat, 390g Styrol, 1440 g Methylmethacrylat und 55,5 g Di-tert.-butylperoxid wurde, wie in Beispiel 1 beschrieben, copolymerisiert und aufgearbeitet.

Das erhaltene Copolymerisat (A/2) hatte eine Glasübergangstemperatur T_{G} von 42°C, einen Erweichungspunkt von 85°C, ein zahlenmittleres Molekulargewicht von 1500, eine Polydispersität von 2,3 und einen Epoxydgehalt von 1,44 Epoxydmilliäqivalenten pro g. Der Feststoffgehalt betrug 98,7 %.

### B. Polymeranaloge Umsetzung

### Beispiel 1b:

In einem zweiwelligen Schneckenextruder (Typ ZSK der Fa. Werner und Pfleiderer) mit gleichlaufenden Schneckenwellen eines Nenndurchmessers von 30 mm und einem Länge/Durchmesser-Verhältnis von 33:1 wurden pro Stunde 2065 g einer Mischung, bestehend aus 96,8 Gew.-% des gemahlenen Copolymerisates (A/1), 1,1 Gew.-% 2,4,6-Trimethylbenzoyldiphenylphosphin und 2,1 Gew.-% Triphenylphosphin, mit 180g Acrylsäure, die mit 100 ppm Phenothiazin stabilisiert war, bei 130°C und einer mittleren Verweilzeit von 7 Minuten umgesetzt.

Das erhaltene radikalisch vernetzbare Copolymerisat hatte eine Glasübergangstemperatur T_{G} von 36°C, einen Erweichungspunkt von 71°C, ein zahlenmittleres Molekulargewicht von 1900, eine Polydispersität von 2,5, einen Epoxydgehalt von 0,14 Epoxydmilliäquivalenten pro g, eine Säurezahl von 3,8 und eine Iodzahl von 24.

### Beispiel 2b:

Dieser Versuch unterschied sich von Beispiel 1 darin, daß pro Stunde 2065 g einer Mischung, bestehend aus 96,8 Gew.-% des gemahlenen Copolymerisates (A/2), 1,1 Gew.-% 2,4,6-Trimethylbenzoyldiphenylphosphin und 2,1 Gew.-% Triphenylphosphin, mit 190 g Acrylsäure polymeranalog umgesetzt wurden.

Das erhaltene radikalisch vernetzbare Copolymerisat hatte eine Glasübergangstemperatur T_{G} von 17°C, einen Erweichungspunkt von 66°C, ein zahlenmittleres Molekulargewicht von 1400, eine Polydispersität von 2,0 und einen Epoxydgehalt von 0,19 Epoxydmilliäqivalenten pro g, eine Säurezahl von 3,5 und eine Iodzahl von 21.

### Herstellung der Pulverlackbeschichtungen

Eine Siebfraktion eines gemahlenen radikalisch vernetzbaren Copolymerisates mit einem Teilchengrößendurchmesser von weniger als 100 µm wurde auf phosphatierte Stahlbleche aufgetragen, 10 Minuten (radikalisch vernetzbares Copolymerisat hergestellt nach Beispiel 1b) bzw. 15 Minuten (radikalisch vernetzbares Copolymerisat hergestellt nach Beispiel 2b) bei 120°C in einem Umlufttrockenschrank getempert und nach dieser Zeit 2 mal mit einer 120 Watt UV-Lampe der Fa. IST bestrahlt. Es wurde eine 50 µm dicke acetonfeste Beschichtung erhalten.

## Patentansprüche

1. Verfahren zur Herstellung von radikalisch vernetzbaren Copolymerisaten mti einem zahlenmittleren Molekulargewicht Mₙ zwischen 1.500 und 10.000 durch polymeranaloge Umsetzung in einem Extruder
A) eines Copolymerisates (A) , welches aus
a1) 20 bis 85 mol-% eines Monomeren (a1) mit dem Strukturelement der Methacrylsäure und
a2) 15 bis 80 mol-% eines sonstigen radikalisch polymerisierenden Monomeren (a2), wobei
a3) 5 bis 50 mol-% der Gesamtmenge der Monomeren (a1) und (a2) funktionelle Gruppen tragende Monomeren (a3) sind, deren funktionelle Gruppen zu einer Kondensations- oder Additionsreaktion befähigt sind,
aufgebaut ist,
mit
B) einem olefinisch ungesättigten Monomeren (B), welches eine funktionelle Gruppe trägt, die zu der der Monomeren (a3) komplementär ist,
dadurch gekennzeichnet, daß man die polymeranaloge Umsetzung bei 70 bis 150°C und einer mittleren Verweilzeit von 3 bis 20 min vornimmt, wobei das Copolymerisat (A) in Lösung mit einem Feststoffgehalt von mindestens 60 Gew.-% eingesetzt wird.

2. Verfahren nach Anspruch 1, dadurch gekennzeichnet, daß man die polymeranaloge Umsetzung in einem selbstreinigenden Mehrschneckenextruder vornimmt.

3. Verfahren nach Anspruch 1 oder 2, dadurch gekennzeichnet, daß man in einem Extruder
I. in einer ersten Zone das Copolymerisat (A) einspeist und fördert,
II. in einer zweiten Zone das Copolymerisat (A) auf 90 bis 150°C erhitzt, das olefinisch ungesättigte Monomere (B) zugibt und mit dem Copolymerisat (A) homogen vermischt,
III.in einer dritten Zone die homogene Schmelze von flüchtigen Bestandteilen befreit und
IV. danach die entgaste Schmelze aus dem Extruder austrägt.

4. Verfahren nach den Ansprüchen 1 bis 2, dadurch gekennzeichnet, daß man die Herstellung der Copolymerisate (A) durch radikalische Substanz- oder Lösungspolymerisation der Monomeren (a1) bis (a3) bei 140 bis 210°C und einer mittleren Verweilzeit von 2 bis 90 min vornimmt.

5. Verfahren nach Anspruch 3, dadurch gekennzeichnet, daß man während der Extrusion Pigmente, Vernetzungskatalysatoren, Stabilisatoren, Mattierungsmittel, Verlaufshilfsmittel, Entgasungsmittel und/oder Lichtschutzmittel zusetzt.

6. Verwendung der nach den Ansprüchen 1 bis 6 hergestellten Copolymerisate als vernetzbare Bindemittelkomponente für die Herstellung von durch UV-Strahlen härtbaren Überzügen.

## Claims

1. A process for the preparation of a copolymer crosslinkable by a free radical method and having a number average molecular weight Mₙ of from 1500 to 10,000, by polymer-analogous reaction, in an extruder, of
A) a copolymer (A) which is composed of
a1) from 20 to 85 mol% of a monomer (a1) having the structural element of methacrylic acid and
a2) from 15 to 80 mol% of another monomer (a2) which undergoes free radical polymerization,
a3) from 5 to 50 mol% of the total amount of the monomers (a1) and (a2) being monomers (a3) which carry functional groups and whose functional groups are capable of undergoing a condensation or addition reaction,
with
B) an olefinically unsaturated monomer (B) which carries a functional group which is complementary to that of the monomers (a3),
wherein the polymer-analogous reaction is carried out at from 70 to 150°C in an average residence time of from 3 to 20 minutes, the copolymer (A) being used in solution with a solids content of at least 60% by weight.

2. A process as claimed in claim 1, wherein the polymer-analogous reaction is carried out in a self-purging multi screw extruder.

3. A process as claimed in claim 1 or 2, wherein, in an extruder,
I. in a first zone, the copolymer (A) is fed in and transported,
II. in a second zone, the copolymer (A) is heated to 90-150°C and the olefinically unsaturated monomer (B) is added and is mixed homogeneously with the copolymer (A),
III.in a third zone, the homogeneous melt is freed from volatile components and
IV. the devolatilized melt is then discharged from the extruder.

4. A process as claimed in any of claims 1 to 2, wherein the preparation of the copolymer (A) is carried out by free radical mass or solution polymerization of the monomers (a1) to (a3) at from 140 to 210°C in an average residence time of from 2 to 90 minutes.

5. A process as claimed in claim 3, wherein pigments, crosslinking catalysts, stabilizers, dulling agents, leveling agents, devolatilization assistants or light stabilizers are added during the extrusion.

6. Use of the copolymer prepared as claimed in any of claims 1 to 5 as a crosslinkable binder component for the production of UV-curable coatings.

## Revendications

1. Procédé de préparation de copolymères réticulables par voie radicalaire, ayant une masse moléculaire en nombre Mn comprise entre 1500 et 10000, par réaction de type polymérisation dans une extrudeuse
A) d'un copolymère (A) qui se compose de
a1) 20 à 85% en moles d'un monomère (a1) comportant l'élément structural de l'acide méthacrylique et de
a2) 15 à 80% en moles d'un autre monomère (a2) polymérisant par voie radicalaire,
a3) 5 à 50% en moles de la quantité totale des monomères (a1) et (a2) étant des monomères (a3) qui portent des groupements fonctionnels, ces groupements fonctionnels étant susceptibles d'une réaction de condensation ou d'addition,
avec
B) un monomère à insaturation oléfinique (B) qui porte un groupement fonctionnel qui est complémentaire de ceux des monomères (a3),
caractérisé en ce que l'on procède à la réaction de type polymérisation à une température de 70 à 150°C et avec une durée de séjour moyenne de 3 à 20 min., le copolymère (A) étant utilisé en solution ayant une teneur en matière solide d'au moins 60% en poids.

2. Procédé selon la revendication 1, caractérisé en ce que l'on procède à la réaction de type polymérisation dans une extrudeuse à plusieurs vis auto-nettoyante.

3. Procédé selon la revendication 1 ou 2, caractérisé en ce que, dans une extrudeuse,
I. dans une première zone, on introduit et on transporte le copolymère (A),
II. dans une deuxième zone, on chauffe le copolymère (A) à 90-150°C, on ajoute le monomère à insaturation oléfinique (B) et on le mélange de façon homogène au copolymère (A),
III.dans une troisième zone, on débarrasse la masse fondue homogène de constituants volatils et
IV.on décharge ensuite de l'extrudeuse la masse fondue dégazée.

4. Procédé selon la revendication 1 ou 2, caractérisé en ce que l'on procède à la préparation des copolymères (A) par polymérisation radicalaire en masse ou en solution des monomères (a1) à (a3), à 140-210°C et avec une durée de séjour moyenne de 2 à 90 min.

5. Procédé selon la revendication 3, caractérisé en ce que l'on ajoute, pendant l'extrusion, des pigments, des catalyseurs de réticulation, des stabilisants, des agents de matité, des agents auxiliaires d'écoulement, des agents de dégazage et/ou des agents de protection contre la lumière.

6. Utilisation des copolymères préparés selon l'une quelconque des revendications 1 à 5, comme composants réticulables de liants pour la préparation de revêtements durcissables par les rayons UV.
